# EUROPÄISCHE PATENTSCHRIFT

(11) **EP 1 555 484 B1**
(45) Veröffentlichungstag und Bekanntmachung des Hinweises auf die Patenterteilung: **21.03.2018**
(21) Anmeldenummer: 05100186.5
(22) Anmeldetag: 13.01.2005
(51) Int. Cl.: F23N 1/02, F23R 3/36, F23R 3/34, F23D 17/00, F23D 23/00, F02C 7/228

(54) **Verfahren zum Betreiben einer Gasturbinen-Brennkammer**
Process to operate a gas turbine combustor
Procédé d'opération d'une chambre de combustion de turbine à gaz.

(30) Priorität: 19.01.2004 DE 102004002631
(43) Veröffentlichungstag der Anmeldung: 20.07.2005
(73) Patentinhaber: Ansaldo Energia IP UK Limited, London W1G 9DQ (GB)
(72) Erfinder: Cerny, Jan, Dr., 5400 Baden (CH); Jhalani, Anurag, 5432 Neuenhof (CH)
(74) Vertreter: Bernotti, Andrea

(56) Entgegenhaltungen:
- EP-A1- 0 976 982
- WO-A1-03/062618
- DE-A1- 19 545 311
- US-A- 5 069 029

## Beschreibung

### Technisches Gebiet

Die vorliegende Erfindung betrifft ein Verfahren zum Betreiben einer Brennkammer für eine Gasturbine, wobei die Brennkammer einen Brennraum sowie mehrere, jeweils an einem Eintritt des Brennraums angeordnete Brenner aufweist.

### Stand der Technik

Damit beim Betrieb einer derartigen Brennkammer möglichst wenig Schadstoffe gebildet werden, erfolgt die Versorgung der einzelnen Brenner mit einem sehr mageren Brennstoff-Oxidator-Gemisch, also mit vergleichsweise großen λ-Werten. Zur Vermeidung von thermoakustischen Druckpulsationen ist es grundsätzlich möglich, die Brenner der Brennkammer in zwei Brennergruppen einzuteilen und die Brenner der beiden Brennergruppen mit Brennstoff-Oxidator-Gemischen zu versorgen, die zwar mager sind, jedoch unterschiedliche λ-Werte aufweisen. Das Dokument DE 19545311 A1 offenbart ein Verfahren zum Betrieb einer Brennkammer mit zwei Brennergruppen , wobei die Brennergruppen mit unterschiedlichen Luftzahlen und Brennstoffströmen betrieben werden können. Bei den Brennern, deren Brennstoff-Oxidator-Gemisch einen kleineren λ-Wert aufweist, steht somit mehr Brennstoff zur Umsetzung zur Verfügung, was zu höheren Temperaturen bei der Verbrennungsreaktion im Brennraum und somit zu einer Reduzierung der Druckpulsationen führt.

Es hat sich jedoch gezeigt, dass beim Betrieb der Brennkammer mit zwei Brennergruppen, deren Brenner mit unterschiedlichen λ-Werten betrieben werden, die Schadstoffemission insgesamt zunimmt, insbesondere die Emission von NOₓ und sichtbaren Rauchgasen (sogenannte "Yellow Plume"), während gleichzeitig die Stabilität der homogenen Verbrennungsreaktion im Brennraum abnimmt.

### Darstellung der Erfindung

Hier will die Erfindung Abhilfe schaffen. Die Erfindung, wie sie in den Ansprüchen gekennzeichnet ist, beschäftigt sich mit dem Problem, für eine Brennkammer der eingangs genannten Art ein verbessertes Betriebsverfahren anzugeben, das insbesondere eine Reduzierung der Schadstoffemission sowie eine Stabilisierung der homogenen Verbrennungsreaktion ermöglicht.

Erfindungsgemäß wird dieses Problem durch den Gegenstand des unabhängigen Anspruchs gelöst. Vorteilhafte Ausführungsformen sind Gegenstand der abhängigen Ansprüche.

Die Erfindung beruht auf dem allgemeinen Gedanken, den Brennern derjenigen Brennergruppe, die mit dem größeren λ-Wert betrieben wird, einen zusätzlichen Brennstoffstrom zuzuführen. Die Erfindung nutzt hierbei die Erkenntnis, dass bei einem herkömmlichen Betrieb mit zwei Brennergruppen, die sich durch verschiedene magere λ-Werte voneinander unterscheiden, nur bei denjenigen Brennern, die mit dem kleineren λ-Wert betrieben werden, im Brennraum eine stationäre Flammenfront entsteht, die eine stabile homogene Verbrennungsreaktion ermöglicht. Im Unterschied dazu kommt es bei den Brennern, die mit dem größeren λ-Wert betrieben werden, im Brennraum nicht zur Ausbildung einer solchen Flammenfront, so dass die dort ablaufende Verbrennungsreaktion niedrigere Temperaturen erzeugt. Von besonderem Interesse ist dabei die Erkenntnis, dass durch die Ausbildung der stationären Flammenfront der Durchströmungswiderstand bei den Brennern ansteigt, die mit den niedrigeren λ-Werten betrieben werden. Dies führt zu einer ungleichmäßigen Verteilung des sämtlichen Brennern gemeinsam zugeführten Oxidatorstroms. Folglich tritt an den Brennern, die mit größeren λ-Werten betrieben werden, ein erhöhter Oxidatorstrom auf. Hierdurch kommt es innerhalb des Brennraums zu Wechselwirkungen zwischen den Reaktionszonen der Brenner der beiden Brennergruppen. Beispielsweise erhöht sich dadurch die Löschgrenze der stationären Flammenfront. Des Weiteren kann sich die Stabilität der Verbrennungsreaktion in der stationären Flammenfront reduzieren.

Durch die erfindungsgemäße Eindüsung eines zusätzlichen Brennstoffstroms bei denjenigen Brennern, die an sich mit dem größeren λ-Wert betrieben werden, kann sich nun auch bei diesen Brennern im Brennraum eine stationäre Flammenfront etablieren. Dies führt dazu, dass auch bei diesen Brennern der Strömungswiderstand ansteigt. In der Folge wird der den Brennern insgesamt zugeführte Oxidatorstrom gleichmäßiger auf die Brenner der beiden Brennergruppen verteilt, wodurch die zuvor genannten Wechselwirkungen reduziert werden. Insgesamt kann durch die erfindungsgemäße Maßnahme bei allen Brennern die Löschtemperaturgrenze abgesenkt werden, wodurch gleichzeitig die Stabilität der homogenen Verbrennungsreaktion erhöht wird. Des Weiteren wird der Eintritt eines kalten Oxidatorstroms in den Brennraum unterdrückt. Für die Brennkammer bedeutet dies, dass sich eine erhebliche Reduzierung der Schadstoffemission einstellt.

Von besonderem Vorteil ist eine Ausführungsform, bei welcher der Zusatzbrennstoffstrom den Brennern der zweiten Brennergruppe so eingedüst wird, dass sich der zusätzlich zugeführte Brennstoff innerhalb dieser Brenner nicht oder nur geringfügig mit dem diesen Brennern zugeführten Oxidator vermischt. Mit anderen Worten die Vermischung des zusätzlich zugeführten Brennstoffs mit dem Oxidator erfolgt erst im Brennraum, so dass gezielt dort die Verbrennungsreaktion in Form der stationären Flammenfront etabliert und stabilisiert werden kann. Der Zusatzbrennstoffstrom gelangt somit direkt in die Flammenfront ohne vorherige Vermischung und Reaktion mit dem Oxidator. Besonders zweckmäßig ist eine Ausgestaltung, bei welcher die Brenner jeweils als Vormischbrenner ausgestaltet sind, bei denen die Brennstoffströme den Brennern so zugeführt werden, dass sich der Brennstoff innerhalb des jeweiligen Brenners mit dem diesem Brenner zugeführten Oxidator vermischt. Bei der Erfindung wird somit klar differenziert zwischen den Brennstoffströmen zur Vormischung mit dem Oxidator und dem Zusatzbrennstoffstrom, der den Brennern mit dem größeren λ-Wert im Brennstoff-Oxidator-Gemisch zugeführt wird. Es hat sich gezeigt, dass die Eindüsung des Zusatzbrennstoffstroms, insbesondere ohne Durchmischung mit dem Oxidatorstrom, zur gewünschten Stabilisierung der Verbrennungsreaktion und zur gewünschten Reduzierung der Schadstoffemissionen führt, während diesbezüglich eine Absenkung des λ-Wertes bei den Vormischbrennern der zweiten Brennergruppe nicht zielführend wäre. Insbesondere wird bei der erfindungsgemäßen Eindüsung des Zusatzbrennstoffstroms bei den mit dem größeren λ-Wert betriebenen Brennern der zweiten Brennergruppe die Entstehung von thermoakustischen Druckpulsationen weiterhin unterdrückt.

### Kurze Beschreibung der Zeichnungen

Ein bevorzugtes Ausführungsbeispiel der Erfindung ist in der Zeichnung dargestellt und wird in der nachfolgenden Beschreibung näher erläutert.

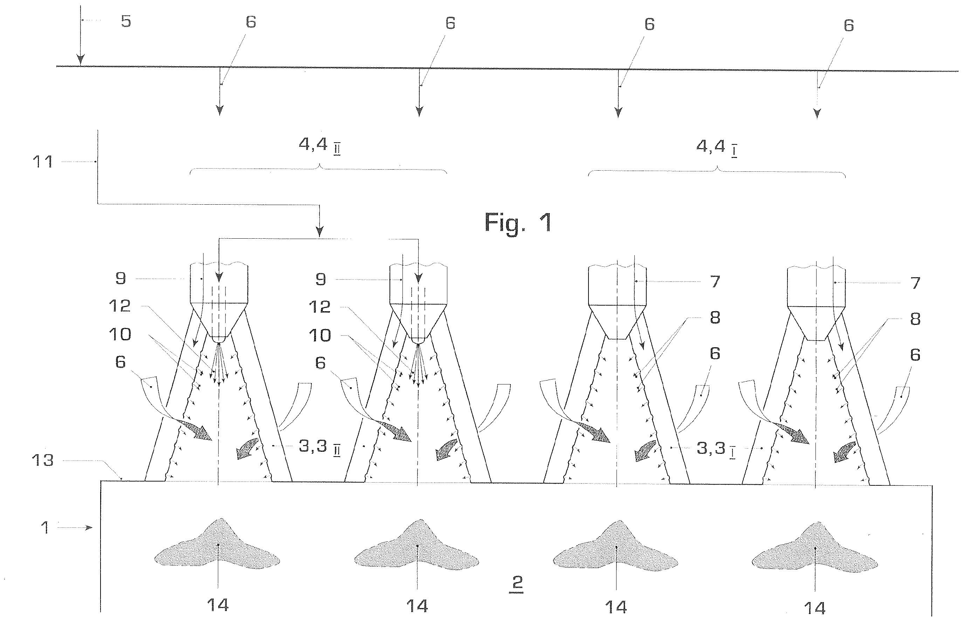

Die einzige Fig. 1 zeigt eine stark vereinfachte Prinzipdarstellung eines Ausschnitts einer Brennkammer nach der Erfindung.

### Wege zur Ausführung der Erfindung

Entsprechend Fig. 1 besitzt eine erfindungsgemäße Brennkammer 1 einen Brennraum 2, der vorzugsweise ringförmig ausgestaltet ist. Eine Längsmittellinie dieses ringförmigen Brennraums 2 erstreckt sich dabei parallel zur Zeichnungsebene senkrecht von oben nach unten. Dementsprechend handelt es sich bei der Darstellung in Fig. 1 nur um einen begrenzten Umfangsabschnitt des Brennraums 2. Die Brennkammer 1 weist mehrere Brenner 3 auf, die in zwei Brennergruppen 4, nämlich eine erste Brennergruppe 4_{I} und eine zweite Brennergruppe 4_{II} eingeteilt sind. Die Brennergruppen 4 sind in Fig. 1 durch geschweifte Klammern charakterisiert. Dementsprechend sind die einzelnen Brenner 3 entweder der ersten Brennergruppe 4_{I} oder der zweiten Brennergruppe 4_{II} zugeordnet und dementsprechend mit 3_{I} bzw. 3_{II} bezeichnet. Die einzelnen Brenner 3 sind an einen Eintritt 13 des Brennraums 2 nebeneinander angeordnet. Bei einem ringförmigen Brennraum 2 erfolgt zweckmäßig eine umfangsmäßig verteilte Anordnung der Brenner 3. Dabei können die in Umfangsrichtung nebeneinander angeordneten Brenner 3 einen Brennerring bilden. Ebenso sind Ausführungsformen möglich, bei denen zwei oder mehr radial beabstandete Brennerringe am Eintritt 13 des Brennraums 2 ausgebildet sind. Jede Brennergruppe 4 enthält einen oder mehrere Brenner 3, wobei sich die Brenner 3 der einzelnen Brennergruppen 4 in Umfangsrichtung abwechseln können, so dass ein oder mehrere Brenner 3 der einen Gruppe 4 in Umfangsrichtung auf einen oder mehrere Brenner 3 der anderen Gruppe 4 folgen.

Für beide Brennergruppen 4 und somit für sämtliche Brenner 3 ist eine gemeinsame Oxidatorversorgung 5 vorgesehen, die den Brennern 3 den benötigten Oxidator, insbesondere Luft, zuführt. Eine von der Oxidatorversorgung 5 erzeugte Oxidatorströmung 6 ist in Fig. 1 durch Pfeile symbolisiert.

Des Weiteren umfasst die Brennkammer 1 für die Brenner 3_{I} der ersten Brennergruppe 4_{I} eine gemeinsame erste Brennstoffversorgung 7. Ein von der ersten Brennstoffversorgung 7 den Brennern 3_{I} der ersten Brennergruppe 4_{I} zugeführter erster Brennstoffstrom 8 ist durch Pfeile symbolisiert. In entsprechender Weise ist zur Versorgung der Brenner 3_{II} der zweiten Brennergruppe 4_{II} mit Brennstoff eine zweite Brennstoffversorgung 9 vorgesehen, wobei ein damit bereit gestellter zweiter Brennstoffstrom 10 durch Pfeile symbolisiert ist. Als Brennstoff dient vorzugsweise Erdgas.

Erfindungsgemäß ist die Brennkammer 1 nun außerdem mit einer Zusatzbrennstoffversorgung 11 ausgestattet, mit deren Hilfe der zweiten Brennergruppe 4_{II} bzw. deren Brenner 3_{II} ein Zusatzbrennstoffstrom 12, ebenfalls durch Pfeile repräsentiert, zugeführt werden kann.

Gemäß einer bevorzugten Ausführungsform handelt es sich bei den Brennern 3 jeweils um Vormischbrenner, bei denen sich der jeweils zugeführte Oxidator mit dem jeweils zugeführten Brennstoff intensiv vermischt, bevor das so gebildete Brennstoff-Oxidator-Gemisch in den Brennraum 2 eintritt. Beispielsweise werden Oxidator und Brennstoff beim jeweiligen Brenner 3 radial zugeführt und mit einem Drall beaufschlagt, wodurch sich eine besonders intensive Durchmischung ergibt.

Beispielsweise kann zu diesem Zweck der Zusatzbrennstoffstrom 12 bei den Brennern 3_{II} der zweiten Brennergruppe 4_{II} axial am Brennerkopf, also an einem vom Brennraum 2 entfernten Ende in den Brenner 3 eingeleitet werden. Grundsätzlich ist auch eine Eindüsung des Zusatzbrennstoffstroms 12 jeweils mittels einer Brennstofflanze denkbar, die dann zentrisch in den jeweiligen Brennern 3_{II} angeordnet ist.

Von besonderer Bedeutung ist nun, dass die Zusatzbrennstoffversorgung 11 so ausgestaltet ist, dass der zusätzlich zugeführte Zusatzbrennstoffstrom 12 den jeweiligen Brenner 3_{II} quasi ungehindert durchströmt, ohne dass es dabei zu einer starken Durchmischung mit dem Oxidator kommt. Auf diese Weise gelangt der Zusatzbrennstoffstrom 12 quasi unvermischt in den Brennraum 2.

Bei der hier gezeigten, bevorzugten Ausführungsform ist die Geometrie der Brenner 3 am Eintritt 13 so gestaltet, dass sich ein sprungartige Querschnittserweiterung beim Übergang in den Brennraum 2 ergibt. In Verbindung mit einer Drallbeaufschlagung des Brennstoff-Oxidator-Gemischs kommt es dadurch im Brennraum 2 zu einem Zusammenbruch des Drallsystems, wodurch innerhalb des Brennraums 2 stromab jedes Brenners 3 eine Rezirkulationszone entstehen kann, welche zur Stabilisierung einer Flammenfront 14 beitragen kann.

Die erfindungsgemäße Brennkammer 1 arbeitet wie folgt:
Im Betrieb der Brennkammer 1 wird dieser ein vorbestimmter Oxidatorstrom 6 über die Oxidatorversorgung 5 zugeführt. In Abhängigkeit der gewünschten Leistung der Brennkammer 1 wird ein Gesamtbrennstoffstrom ermittelt, der im Brennraum 2 verbrannt werden muss, um die erwünschte Brennkammerleistung zu erbringen. Eine geeignete, hier nicht gezeigte Steuerung bestimmt nun für jede Brennergruppe 4 einen geeigneten Anteilsfaktor, der die Aufteilung des Gesamtbrennstoffstroms auf die beiden Brennergruppen 4 definiert. Dabei ist vorgesehen, dass die Brenner 3_{I} der ersten Brennergruppe 4_{I} mit einem Brennstoff-Oxidator-Gemisch betrieben werden sollen, dessen λ-Wert zwar größer 1, jedoch kleiner ist als der λ-Wert im Brennstoff-Oxidator-Gemisch, mit dem die Brenner 3_{II} in der zweiten Brennergruppe 4_{II} betrieben werden. Durch diese Vorgabe ist sichergestellt, dass sowohl die Brenner 3_{I} der ersten Brennergruppe 4_{I} als auch die Brenner 3_{II} der zweiten Brennergruppe 4_{II} mager betrieben werden. Dabei ist wichtig, dass den Brennern 3_{I} der ersten Brennergruppe 4_{I} jeweils mehr Brennstoff zugeführt wird, als den Brennern 3_{II} der zweiten Brennergruppe 4_{II}. In der Folge kann sich im Brennraum 2 zumindest stromab der Brenner 3_{I} der ersten Brennergruppe 4_{I} jeweils eine stationäre Flammenfront 14 etablieren.

Erfindungsgemäß wird nun den Brennern 3_{II} der zweiten Brennergruppe 4_{II} zusätzlich der Zusatzbrennstoffstrom 12 zugeführt. Hierdurch kann sich stromab der Brenner 3_{II} der zweiten Brennergruppe 4_{II} im Brennraum 2 ebenfalls jeweils eine stationäre Flammenfront 14 ausbilden. Insgesamt kann dadurch im Brennraum 2 eine vergleichsweise homogene Temperaturverteilung erreicht werden. Gleichzeitig können die Schadstoffemissionen, insbesondere die Emissionen von NOₓ, von CO sowie von sichtbaren Rauchgasen, erheblich reduziert werden. Des Weiteren wird die homogene Verbrennungsreaktion im Brennraum 2 stabilisiert, indem die Löschtemperaturgrenze auf eine relativ niedrige Temperatur abgesenkt wird. Durch die Etablierung einer stationären Flammenfront 14 auch stromab der Brenner 3_{II} der zweiten Brennergruppe 4_{II} stellt sich auch an diesen Brennern 3_{II} im wesentlichen derselbe Durchströmungswiderstand wie an den Brennern 3_{I} der ersten Brennergruppe 4_{I} ein. Demzufolge stellt sich automatisch eine im wesentlichen gleichmäßige Aufteilung des Oxidatorstroms 6 auf die einzelnen Brenner 3 ein, was einen wesentlichen Beitrag zur gewünschten Stabilisierung und Homogenisierung der Reaktionen im Brennraum 2 leistet. Des Weiteren ermöglicht es die erfindungsgemäße Eindüsung des Zusatzbrennstoffstroms 12, die Anteilsfaktoren für die Aufteilung des Gesamtbrennstoffstroms so zu wählen, dass sich die λ-Werte bei den Brennern 3 der beiden Brennergruppen 4 nur noch vergleichsweise wenig voneinander unterscheiden. Auch diese Maßnahme führt zu einer homogenen Temperaturverteilung im Brennraum 2 und somit insbesondere zu einer Reduzierung der NOₓ-Bildung.

Vorzugsweise ist die Zusatzbrennstoffströmung 12 so dimensioniert, dass die Verbrennungsreaktion stromab der zugehörigen Brenner 3_{II} im Brennraum 2 nach wie vor mager abläuft, also mit einem λ-Wert größer als 1. Von besonderem Interesse kann dabei eine Ausführungsform sein, bei welcher die Menge des Zusatzbrennstoffstroms 12 gerade so groß dimensioniert ist, wie die Mengendifferenz zwischen dem ersten Brennstoffstrom 8 und dem zweiten Brennstoffstrom 10. Auf diese Weise wird jedem Brenner 3_{II} der zweiten Brennergruppe 4_{II} letztlich dieselbe Brennstoffmenge zugeführt wie jedem Brenner 3_{I} der ersten Brennergruppe 4_{I}. Alternativ oder zusätzlich kann die Dimensionierung des Zusatzbrennstoffstroms 12 auch so gewählt sein, dass sich letztlich im Brennraum 2 sowohl stromab der Brenner 3_{II} der zweiten Brennergruppe 4_{II} als auch stromab der Brenner 3_{I} der ersten Brennergruppe 4_{I} eine Verbrennungsreaktion bei etwa demselben λ-Wert einstellt.

### Bezugszeichenliste

- 1: Brennkammer
- 2: Brennraum
- 3: Brenner
- 4: Brennergruppe
- 5: Oxidatorversorgung
- 6: Oxidatorstrom
- 7: erste Brennstoffversorgung
- 8: erster Brennstoffstrom
- 9: zweite Brennstoffversorgung
- 10: zweiter Brennstoffstrom
- 11: Zusatzbrennstoffversorgung
- 12: Zusatzbrennstoffstrom
- 13: Eintritt von 2
- 14: Flammenfront

## Patentansprüche

1. Verfahren zum Betreiben einer Brennkammer (1) für eine Gasturbine,
- wobei die Brennkammer (1) einen Brennraum (2) sowie mehrere Brenner (3) aufweist, die jeweils an einem Eintritt (13) des Brennraums (2) angeordnet sind,
- wobei die Brenner (3) in zwei Brennergruppen (4) mit gleicher oder unterschiedlicher Brenneranzahl eingeteilt sind,
- wobei für alle Brenner (3) eine gemeinsame Oxidatorversorgung (5) vorgesehen ist,
- wobei für die Brenner (3₁) der ersten Brennergruppe (4₁) eine gemeinsame erste Brennstoffversorgung (7) vorgesehen ist,
- wobei für die Brenner (3₁₁) der zweiten Brennergruppe (4₁₁), die mit dem größeren Lambda-Wert betrieben wird, eine gemeinsame zweite Brennstoffversorgung (9) sowie eine gemeinsame Zusatzbrennstoffversorgung (11) vorgesehen ist,
- wobei den Brennern (3₁) der ersten Brennergruppe (4₁) über die erste Brennstoffversorgung (7) ein erster Brennstoffstrom (8) so zugeführt wird, dass sich an den Brennern (3₁) der ersten Brennergruppe (4₁) ein mageres Brennstoff-Oxidator-Gemisch einstellt,
- wobei den Brennern (3₁₁) der zweiten Brennergruppe (4₁₁) über die zweite Brennstoffversorgung (9) ein zweiter Brennstoffstrom (10) so zugeführt wird, dass sich an den Brennern (3₁₁) der zweiten Brennergruppe (4₁₁) ein mageres Brennstoff-Oxidator-Gemisch einstellt,
- wobei der erste Brennstoffstrom (8) je Brenner (3₁) größer gewählt ist als der zweite Brennstoffstrom (10) je Brenner (3₁₁),
- wobei den Brennern (3₁₁) der zweiten Brennergruppe (4₁₁) zusätzlich über die Zusatzbrennstoffversorgung (11) über eine Eindüsung ein Zusatzbrennstoffstrom (12) zugeführt wird.

2. Verfahren nach Anspruch 1, **dadurch gekennzeichnet,**
- **dass** der Zusatzbrennstoffstrom (12) den Brennern (3₁₁) der zweiten Brennergruppe (4₁₁) so zugeführt wird, dass sich der zusätzlich zugeführte Brennstoff innerhalb der Brenner (3₁₁) nicht oder nur geringfügig mit dem diesen Brennern (3₁₁) zugeführten Oxidator vermischt.

3. Verfahren nach Anspruch 1 oder 2, **dadurch gekennzeichnet,**
- **dass** die Brenner (3) als Vormischbrenner ausgestaltet sind und
- **dass** der erste Brennstoffstrom (8) und der zweite Brennstoffstrom (10) den Brennern (3) so zugeführt werden, dass sich der Brennstoff innerhalb der Brenner (3) mit dem diesen Brennern (3) zugeführten Oxidator vermischt.

4. Verfahren nach Anspruch 3, **dadurch gekennzeichnet,**
- **dass** der erste Brennstoffstrom (8) und der zweite Brennstoffstrom (10) so gewählt werden, dass das in den Brennern (3₁) der ersten Brennergruppe (4₁) gebildete Brennstoff-Oxidator-Gemisch einen kleineren λ-Wert aufweist als das in den Brennern (3₁₁) der zweiten Brennergruppe (4₁₁) gebildete Brennstoff-Oxidator-Gemisch.

5. Verfahren nach einem der Ansprüche 1 bis 4, **dadurch gekennzeichnet,**
- **dass** der Zusatzbrennstoffstrom (12) so gewählt ist, dass die Verbrennungsreaktion im Brennraum (2) noch mager abläuft.

6. Verfahren nach einem der Ansprüche 1 bis 5, **dadurch gekennzeichnet,**
- **dass** der Zusatzbrennstoffstrom (12) etwa gleich groß gewählt wird wie eine Differenz zwischen erstem Brennstoffstrom (8) und zweitem Brennstoffstrom (10).

## Claims

1. Method for operating a combustion chamber (1) for a gas turbine,
- wherein the combustion chamber (1) has a combustion space (2) and several burners (3) which are each arranged at an inlet to the combustion space (2),
- wherein the burners (3) are divided into two burner groups (4) with the same or a different number of burners,
- wherein a common oxidator supply (5) is provided for all burners (3),
- wherein a common first fuel supply (7) is provided for the burners (3₁) of the first burner group (4₁),
- wherein a common second fuel supply (9) and a common additional fuel supply (11) are provided for the burners (3₁₁) of the second burner group (4₁₁) which are operated with a higher lambda value,
- wherein a first fuel flow (8) is supplied to the burners (3₁) of the first burner group (4₁) via the first fuel supply (7) such that a lean fuel-oxidator mixture is set at the burners (3₁) of the first burner group (4₁),
- wherein a second fuel flow (10) is supplied to the burners (3₁₁) of the second burner group (4₁₁) via the second fuel supply (9) such that a lean fuel-oxidator mixture is set at the burners (3₁₁) of the second burner group (4₁₁),
- wherein the first fuel flow (8) per burner (3₁) is set larger than the second fuel flow (10) per burner (3₁₁),
- wherein for the burners (3₁₁) of the second burner group (4₁₁), in addition an additional fuel flow (12) is supplied via the additional fuel supply (11) by injection.

2. Method according to claim 1, **characterised in that**
- the additional fuel flow (12) is supplied to the burners (3₁₁) of the second burner group (4₁₁) such that the additionally supplied fuel does not mix or only mixes slightly inside the burners (3₁₁) with the oxidator supplied to these burners (3₁₁).

3. Method according to claim 1 or 2, **characterised in that**
- the burners (3) are configured as premix burners, and
- the first fuel flow (8) and the second fuel flow (10) are supplied to the burners (3) such that the fuel mixes inside the burners (3) with the oxidator supplied to these burners (3).

4. Method according to claim 3, **characterised in that**
- the first fuel flow (8) and the second fuel flow (10) are selected such that the fuel-oxidator mixture formed in the burners (3₁) of the first burner group (4₁) has a lower λ value than the fuel-oxidator mixture formed in the burners (3₁₁) of the second burner group (4₁₁).

5. Method according to any of claims 1 to 4, **characterised in that**
- the additional burner flow (12) is selected such that the combustion reaction in the combustion space (2) is still lean.

6. Method according to any of claims 1 to 5, **characterised in that**
- the additional fuel flow (12) is selected approximately as large as a difference between the first fuel flow (8) and the second fuel flow (10).

## Revendications

1. Procédé d'exploitation d'une chambre de combustion (1) pour une turbine à gaz,
- la chambre de combustion (1) comprenant un espace de combustion (2) ainsi que plusieurs brûleurs (3), qui sont disposés chacun au niveau d'une entrée (13) de l'espace de combustion (2),
- les brûleurs (3) étant divisés en deux groupes de brûleurs (4) avec des nombres identiques ou différents de brûleurs,
- pour tous les brûleurs (3), une alimentation commune en oxydant (5) étant prévue,
- pour les brûleurs (3₁) du premier groupe de brûleurs (4₁), une première alimentation commune en carburant (7) étant prévue,
- pour les brûleurs (3₁₁) du deuxième groupe de brûleurs (4₁₁), qui sont exploités avec la valeur de lambda plus importante, une deuxième alimentation commune en carburant (9) ainsi qu'une alimentation commune en carburant supplémentaire (11) étant prévues,
- un premier flux de carburant (8) étant introduit dans les brûleurs (3₁) du premier groupe de brûleurs (4₁) par l'intermédiaire de la première alimentation en carburant (7), de façon à ce qu'au niveau des brûleurs (3₁) du premier groupe de brûleurs (4₁) un mélange carburant-oxydant pauvre soit généré,
- un deuxième flux de carburant (10) étant introduit dans les brûleurs (3₁₁) du deuxième groupe de brûleurs (4₁₁) par l'intermédiaire de la deuxième alimentation en carburant (9), de façon à ce qu'au niveau des brûleurs (3₁₁) du deuxième groupe de brûleurs (4₁₁) un mélange carburant-oxydant pauvre soit généré,
- le premier flux de carburant (8) par brûleur (3₁) étant choisi comme supérieur au deuxième flux de carburant (10) par brûleur (3₁₁),
- pour les brûleurs (3₁₁) du deuxième groupe de brûleurs (4₁₁), un flux de carburant supplémentaire (12) étant en outre introduit par l'intermédiaire de l'alimentation en carburant supplémentaire (11) à l'aide d'une injection.

2. Procédé selon la revendication 1, **caractérisé en ce que**
- le flux de carburant supplémentaire (12) est introduit dans les brûleurs (3₁₁) du deuxième groupe de brûleurs (4₁₁) de façon à ce que le carburant introduit en plus à l'intérieur des brûleurs (3₁₁) ne se mélange pas ou très peu avec l'oxydant introduit dans ces brûleurs (3₁₁).

3. Procédé selon la revendication 1 ou 2, **caractérisé en ce que**,
- les brûleurs (3) sont conçus comme des brûleurs de pré-mélange et
- le premier flux de carburant (8) et le deuxième flux de carburant (10) sont introduits dans les brûleurs (3) de façon à ce que le carburant se mélange, à l'intérieur des brûleurs (3), avec l'oxydant introduit dans ces brûleurs (3).

4. Procédé selon la revendication 3, **caractérisé en ce que**
- le premier flux de carburant (8) et le deuxième flux de carburant (10) sont choisis de façon à ce que le mélange carburant-oxydant formé dans les brûleurs (3₁) du premier groupe de brûleurs (4₁) présente une valeur λ inférieure à celle du mélange carburant-oxydant formé dans les brûleurs (3₁₁) du deuxième groupe (4₁₁).

5. Procédé selon l'une des revendications 1 à 4, **caractérisé en ce que**
- le flux de carburant supplémentaire (12) est choisi de façon à ce que la réaction de combustion se déroule de manière encore pauvre dans l'espace de combustion (2).

6. Procédé selon l'une des revendications 1 à 5, **caractérisé en ce que**
- le flux de carburant supplémentaire (12) est choisi de façon à être à peu près égal à une différence entre le premier flux de carburant (8) et le deuxième flux de carburant (10).
